# EUROPEAN PATENT SPECIFICATION

(11) **EP 2 664 974 B1**
(45) Date of publication and mention of the grant of the patent: **07.04.2021**
(21) Application number: 12168592.9
(22) Date of filing: 18.05.2012
(51) Int. Cl.: G06F 1/16, G06F 3/02, G06F 3/023

(54) **Mobile wireless communications system including NFC carrying case and related methods**
Mobiles drahtloses Kommunikationssystem mit NFC-Tragegehäuse und zugehörige Verfahren
Système de communication mobile sans fil comprenant un boîtier de transport NFC et procédés associés

(43) Date of publication of application: 20.11.2013
(73) Proprietor: BlackBerry Limited, Waterloo, ON N2K 0A7 (CA)
(72) Inventor: Aldana, Leonardo, Waterloo, ON N2L 3W8 (CA); Scharkov, John Ivan, Waterloo, ON, N2L 3W8 (CA); Smart, Andrew Douglas, San Jose, California,95123 (US)
(74) Representative: Vigand, Philippe

(56) References cited:
- WO-A1-2007/089158
- Francisco De Jesus: "NFC one2TOUCH foldable full-sized keyboards for smartphones and tablets", Worldwide Tech & Science, 5 March 2012 (2012-03-05), XP002686288, Retrieved from the Internet: URL:http://worldwidegadget.blogspot.nl/201 2/03/nfc-one2touch-foldable-full-sized.htm l [retrieved on 2012-10-30]

## Description

### Technical Field

The present disclosure generally relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

The article titled "one2TOUCH foldable full-sized NFC keyboards for smartphones and tablets" by Francisco De Jesus available on Internet, discloses several silicone keyboards that connect to smartphones and tablets simply by laying the mobile device on top - no pairing required. The keyboards feature "Touch & Type" functionality and have a pad that the device can rest on. In the case of one smartphone keyboard, a pad in the center where the phone rests separates left- and right-hand keys. A second model requires the phone to rest along the top edge of the keyboard in order to connect. Once sitting on the keyboard, the phone connects to the keyboard via NFC and is ready to receive input. The silicone keyboard is waterproof, and folds to fit into a bag or pocket.

International Application No. WO 2007/089158 is directed to a keyboard including user-operable alphanumeric keys. One or more identification devices associated with the user-operable keys are included in the keyboard. When placed in proximity to the keyboard, the one or more identification devices selectively communicate with a digital apparatus in response to user-actuation of the user-operable keys. The keyboard comprises a flexible substrate for enabling the keyboard to be folded into a non-deployed inactive state, and unfolded into a deployed active state for communicating with the digital apparatus. When in proximity thereto, the keyboard communicates with the apparatus by way of near-field magnetic and/or electrostatic coupling. The keyboard includes an intermediate resonant circuit for interfacing between the one or more identification devices and the digital apparatus; the resonant circuit includes a component spatially disposed to overlay a first region onto the digital apparatus in use, and to overlay a second region coupled to the one or more identification devices in use for coupling signals therebetween. The keyboard is especially useful for mobile telephones and personal digital assistants (PDAs) for rendering data entry easier.

### Brief Description of the Drawings

FIG. 1 is a perspective view of a mobile wireless communications system in accordance with an example embodiment.
FIG. 2 is a schematic block diagram of the mobile communications system of FIG. 1.
FIG. 3 is a schematic diagram of a portion of the NFC carrying case of FIG. 1.
FIG. 4 is a schematic diagram of an NFC carrying case in accordance with another example embodiment.
FIG. 5 is a schematic block diagram illustrating additional components that may be included in the mobile wireless communications device of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

In accordance with an example embodiment, a mobile wireless communications system may include a mobile wireless communications device. The mobile wireless communications device may include a portable housing, a wireless transceiver carried by the portable housing, and a processor carried by the portable housing and coupled to the wireless transceiver, for example. The mobile wireless communications device may also include a near-field communication (NFC) device coupled to the processor.

An NFC carrying case may be configured to carry and communicate with the mobile wireless communications device. The NFC carrying case may include a base panel configured to carry the mobile wireless communications device, and a removable cover panel coupled to the base panel and configured to removably cover at least one side of the mobile wireless communications device. The NFC carrying case may also include a plurality of pairs of discontinuous NFC circuit segments carried by the removable cover panel, and a plurality of switch assemblies each carried by the removable cover panel. Each switch assembly may be configured to selectively couple a respective pair of discontinuous NFC circuit segments to establish NFC communication with the NFC device.

Each pair of discontinuous NFC circuit segments may include a pair of discontinuous conductive traces, for example. Each pair of discontinuous NFC circuit segments may include a pair of flexible discontinuous NFC circuit segments.

Each of the plurality of switch assemblies may include an NFC controller. Each NFC controller has a different function associated therewith, for example.

The plurality of switch assemblies may include an array of input keys, for example. The plurality of switch assemblies may be carried by an inner surface of the removable cover panel, for example.

The NFC carrying case may further include a hinge panel coupled between the base panel and the removable cover panel. The NFC carrying case may further include a frame extending outwardly from the base panel, for example. The mobile wireless communications device may be carried within the frame.

A method aspect is directed to a method of making an NFC carrying case for a mobile wireless communications device that may include a portable housing, a wireless transceiver carried by the portable housing, a processor carried by the portable housing and coupled to the wireless transceiver, and a near-field communication (NFC) device coupled to the processor. The method may include forming a base panel to carry the mobile wireless communications device and a removable cover panel coupled to the base panel to removably cover at least one side of the mobile wireless communications device. The method may also include positioning a plurality of pairs of discontinuous NFC circuit segments in the removable cover panel. The method may further include positioning a plurality of switch assemblies on the removable cover panel. Each switch assembly may selectively couple a respective pair of discontinuous NFC circuit segments to establish NFC communication with the NFC device.

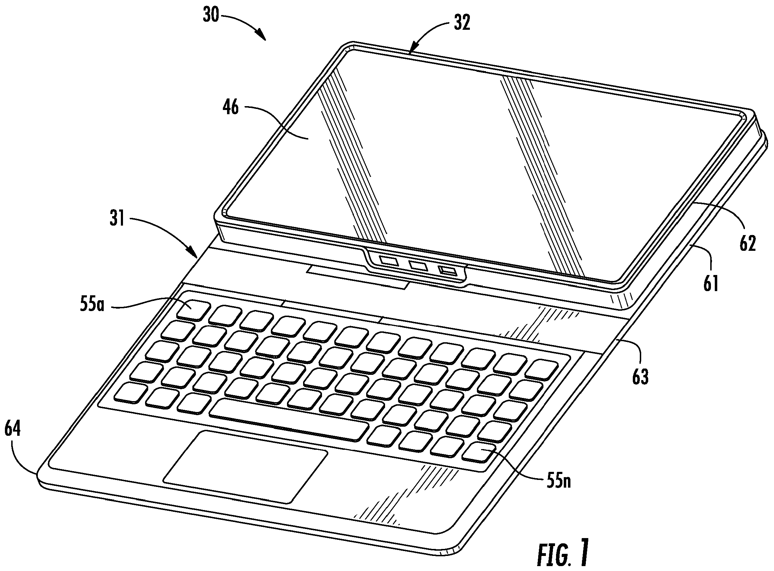

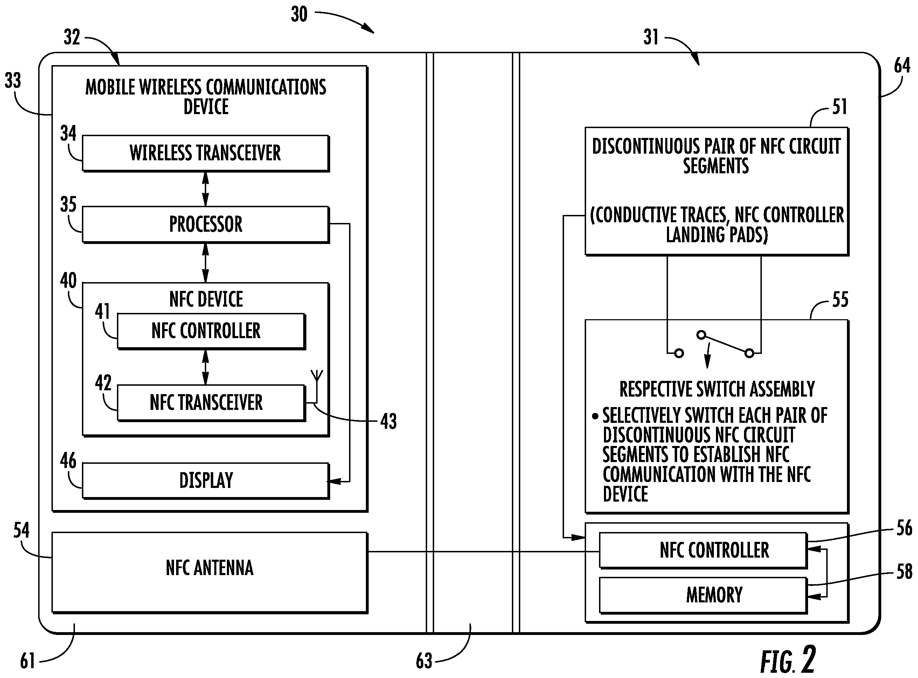

Referring initially to FIGS. 1-2, a mobile wireless communications system 30 illustratively includes a mobile wireless communications device 32 (also referred to as a "mobile device" herein). Example mobile wireless communications devices may include portable or personal media players (e.g., music or MP3 players, video players, etc.), portable gaming devices, portable or mobile telephones, smartphones, tablet computers, digital cameras, etc.

The mobile device 32 illustratively includes a portable housing 33 and a wireless transceiver 34 carried by the portable housing 33. The wireless transceiver 34 may comprise a cellular transceiver or other type of wireless communications transceiver, and may communicate any combination of voice and data, such as, for example, email.

The mobile device 32 includes a display 46 carried by the portable housing 33. The display 46 may comprise a liquid crystal display (LCD) and may be configured to display information relating to data or voice communications. The display 46 may be in the form of an active display that includes a backlight, for example. The display **46** may display email information, contact information, or call information. The display **46** may be another type of display, for example, a passive display, and may display other information.

The mobile device **32** also includes a processor **35** that is carried by the portable housing **33** and coupled with the wireless transceiver 34 and the display 46. The processor 35 may be implemented using hardware (e.g., memory, etc.) and software components, i.e., computer-readable instructions for causing the mobile device 32 to perform the various functions or operations described herein.

The mobile device 32 also includes a NFC device 40 carried by the portable housing 33 and coupled with the processor 35. The NFC device 40 includes a NFC controller 41 and a NFC transceiver 42 coupled with the NFC controller 41.

The NFC device 40 also includes an NFC antenna 43 carried by the portable housing 33. Of course, more than one NFC antenna may be carried by the portable housing 33 and coupled to the NFC transceiver **42.**

The NFC controller 41, the NFC transceiver 42, and the NFC antenna 43 advantageously cooperate to perform at least one NFC communication function. For example, the NFC device 40 may communicate directly with an NFC carrying case 31 that is part of the communications system 30 based upon proximity thereto using NFC communication.

The NFC carrying case **31** is an accessory configured to carry mobile device **32.** For example, the NFC carrying case **31** may be a protective case as will be described in further detail below.

The NFC carrying case **31** may be configured to communicate directly with the mobile wireless communications device **32.** In other words, there may be no intermediate devices or antennas, for example, to expand the range of communications between the NFC device 40 and the NFC carrying case 31. In some embodiments, there may an intermediate device or antenna.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The NFC carrying case 31 is illustratively a flip-type carrying case that includes a base panel 61. A frame 62 extends outwardly from the base panel 61 (FIG. 1). The mobile device 32 is carried within the frame 62. The frame 62 may provide increased protection for the mobile device 32 while being carried. In some embodiments, the NFC carrying case 31 may not include a frame 62.

A hinge panel **63** couples the base panel to a removable cover panel **64** or lid. More particularly, the hinge panel **63** advantageously permits the removable cover panel **64** to be moved to cover the display **46** of the mobile device **32.** The removable cover panel **64** may provide increased protection from damage or wear and tear, for example, while be carried, but not in use.

As will be appreciated by those skilled in the art, the removable cover panel 64 may be removed to expose the display 46 of the mobile device 32 during use. Of course, the removable cover panel 64 may cover other parts of the mobile device 32. Additionally, in some embodiments, the removable cover panel 64 may include cover hinge panels so that it may be folded to a reduced size, for example, and may support the NFC carrying case 31 while in use.

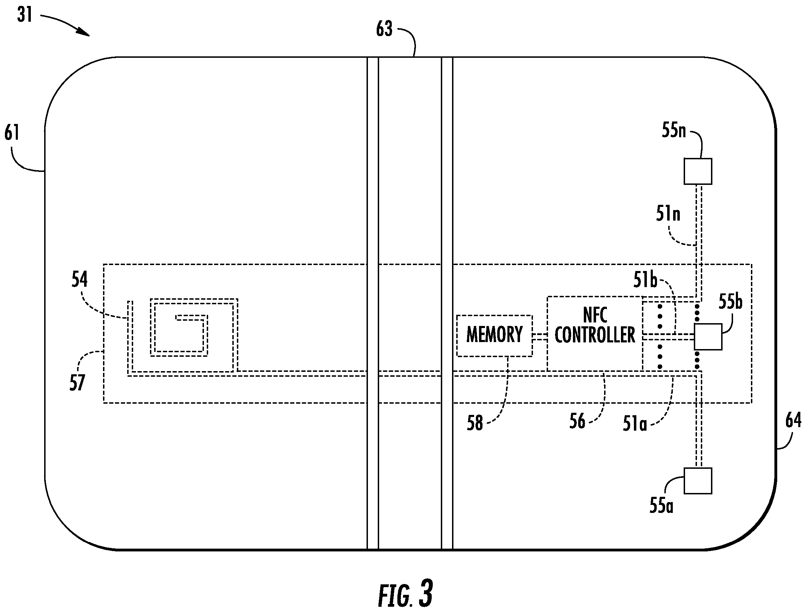

Referring now additionally to FIG. 3, pairs of discontinuous NFC circuit segments **51a-51n** are carried by the removable cover panel 64. The discontinuous NFC circuit segments **51a-51n** are illustratively in the form of discontinuous flexible conductive traces. In some embodiments, the discontinuous pairs of conductive traces **51a-51n** may be carried by a flexible substrate 57 carried by the removable cover panel 64 and the base panel 61. The discontinuous NFC circuit segments **51a-51n** may be in the form of other discontinuous circuit portions, for example, antenna portions, as will be appreciated by those skilled in the art.

More particularly, the pairs of discontinuous flexible conductive traces **51a-51n** may be embedded within the removable cover panel **64.** In some embodiments, the pairs of flexible discontinuous conductive traces **51a-51n** may be secured, via an adhesive, for example, to the removable cover panel **64,** and may be covered with a protective layer. The protective layer may be the same color and texture of the removable cover panel 64 for increased aesthetic appeal.

An NFC antenna 54 is carried by the base panel 61 and is coupled to the flexible discontinuous conductive traces **51a-51n.** More particularly, the NFC antenna 54 may also be embedded within the base panel 61. In some embodiments, more than one NFC antenna 54 may be carried by the base panel 61 or, alternatively or additionally, may be carried by the removable cover panel 64. Additionally, as noted above, in some embodiments the NFC antenna may define the pairs of discontinuous circuit segments.

The NFC carrying case 31 also includes an NFC controller 56 and a memory 58, for example, an electronic erasable programmable read-only memory (EEPROM), carried by the removable cover panel 64 and coupled to the NFC antenna 54 and the flexible discontinuous conductive traces **51a-51n.** The NFC controller 56 may also be carried by the flexible substrate 57 and embedded within the removable cover panel 64. Of course, any of the NFC controller 56, the memory 58, and the flexible discontinuous conductive traces **51a-51n** may be carried or embedded within the base panel **61.** Other or additional circuitry may be carried by one or both of the base panel **61** and the removable cover panel **64,** for example, energy storage and regulation circuitry.

The NFC controller **56** may cooperate with the memory **58** to perform various NFC communications functions, for example, based upon an input thereto, as will be described in detail below. The NFC controller 56 may perform additional functions, such as, for example, energy storage and regulation, and may also cooperate with additional input devices, for example, a touchpad, as will be appreciated by those skilled in the art.

The NFC carrying case 31 also includes switch assemblies 55a-55n in the form of an array of input keys (i.e., a keyboard) coupled to the NFC controller 56. Each input key 55a-55n is carried by the removable cover panel 64. More particularly, each input key 55a-55n is carried by an inner surface of the removable cover panel 64. In other words, the input keys 55a-55n are not visible when the removable cover panel 64 is covering the display 46. The input keys 55a-55n are exposed when the NFC carrying case 31 is open, thus allowing access thereto for providing input. By being carried by the inner surface of the removable cover panel 64, the input keys 55a-55n may have increased protection from damage and wear when the mobile device 32 is not in use.

Each input key 55a-55n selectively couples the respective pair of flexible discontinuous conductive traces 51a-51n to establish NFC communication with the NFC device **40.** In other words, a segment from one of the flexible discontinuous conductive traces **51a-51n** is removed or decoupled, and each input key **55a-55n,** which may be in the form of an external jumper, for example, selectively couples the flexible discontinuous conductive traces or closes the circuit or loop.

Based upon which of the input keys 55a-55n and respective flexible discontinuous conductive traces **51a-51n** are selectively coupled may determine the type of NFC communication or specific commands or instructions communicated to the NFC device 40. For example, each of the input keys **55a-55n** may be mapped to letter of the alphabet or a key on a computer keyboard so that NFC communication established with the NFC device 40 is that of the corresponding letter or key (i.e., an NFC keyboard). Of course, other or additional NFC commands or functions may be communicated to the NFC device 40.

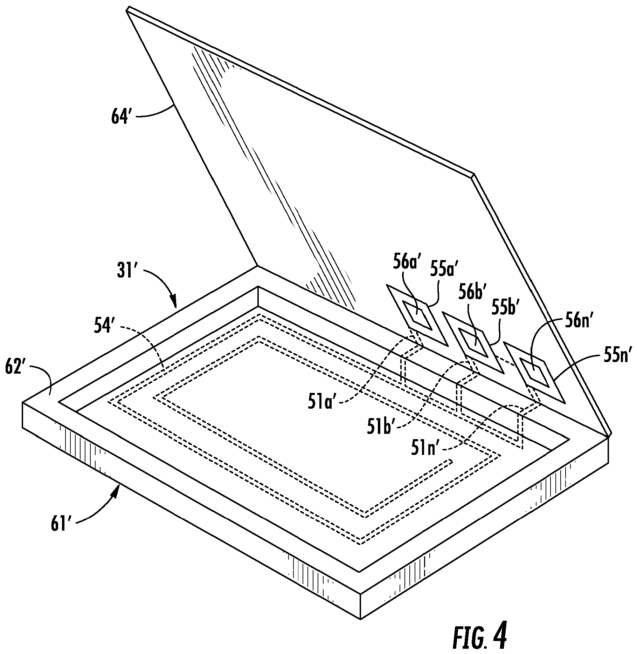

Referring now to FIG. 4, in another embodiment, each switch assembly **55a'-55n'** may include an NFC controller **56a'-56n'.** In other words, each NFC controller **56a'-56n** may selectively couple the flexible discontinuous conductive traces **51a'-51n'** or discontinuous landing pads for the NFC controller **56a'-56n'** to establish NFC communication with the NFC device 40'. As noted above, the type of NFC communication or specific commands or instructions communicated to the NFC device 40' may be based upon the NFC controller **56a'-56n',** for example. In other words, each NFC controller **56a'-56n'** is decoupled, and may be considered part of the respective switch assembly **55a'-55n',** i.e., carried by a pushbutton. As will be appreciated by those skilled in the art, a different switch assembly **55a'-55n'** and respective NFC controller **56a'-56n'** may be used with the same NFC antenna **54',** each having a different NFC code or instructions for sending to the NFC device **40'.** For example, each NFC controller **56a'-56n'** may include instructions for sending a letter from a keyboard to the NFC device **40'.**

In some embodiments, each switch assembly **55a'-55n'** may be removable or movable so that a different NFC controller **56a'-56n'** may be included or integrated into each switch assembly. Each NFC controller **56a'-56n'** may have a different command or instruction set associated therewith and activates the NFC antenna **54'** with the different commands. Further details and arrangements of the pairs of discontinuous NFC circuit segments and switch assemblies are described in US 2013/0196597 A1, assigned to the assignee of the present application.

While the switch assemblies **55a-55n** described above are carried by the removable cover panel **64,** and the NFC antenna **54** is carried by the base panel **61** it should be understood that any of the NFC antenna and the switch assemblies may be carried by any of the removable cover panel, the base panel, the hinge panel **63,** or by other parts of the NFC carrying case **31.** For example, the switch assemblies **55a-55n** may not be carried by the removable cover panel **64,** or, alternatively or additionally, the NFC antenna **54** may be carried by the removable cover panel.

As will be appreciated by those skilled in the art, the NFC carrying case **31** described herein generally does not require a power source, such as, for example, a battery, which is generally required for a typical wireless keyboard. Additionally, the NFC carrying case 31 may not use any cables or power chargers that are typically be associated with a rechargeable battery. The NFC carrying case 31 advantageously eliminates batteries for wireless keyboard functions, which may reduce overall costs. Indeed, as will be appreciated by those skilled in the art, removal of the battery, for example, may reduce thickness of the NFC carrying case 31 by as much as 10%-15%. User convenience may also be increased since there are no batteries to lose charge, which, in a typical wireless keyboard may occur without any notification.

Moreover, any of the above configurations or embodiments may be used alone or in combination with others to achieve a desired function. The discontinuity of the NFC circuit segments **51a-51n** may be formed in any number of places or positions, and the implementation of the connection between the switch assemblies **55a-55n** and the NFC antenna 54 may depend on the type and size of the mobile device 32.

A method aspect is directed to a method of making an NFC carrying case 31 for a mobile wireless communications device **32** that may include a portable housing **33,** a wireless transceiver **34** carried by the portable housing, a processor **35** carried by the portable housing and coupled to the wireless transceiver, and a near-field communication (NFC) device **40** coupled to the processor. The method may include forming a base panel **61** to carry the mobile wireless communications device **32** and a removable cover panel 64 coupled to the base panel to removably cover at least one side of the mobile wireless communications device. The method may also include positioning pairs of discontinuous NFC circuit segments **51a-51n** in the removable cover panel 64. The method may further include positioning a plurality of switch assemblies **55a-55n** on the removable cover panel 64. Each switch assembly **55a-55n** may selectively couple a respective pair of discontinuous NFC circuit segments **51a-51n** to establish NFC communication with the NFC device 40.

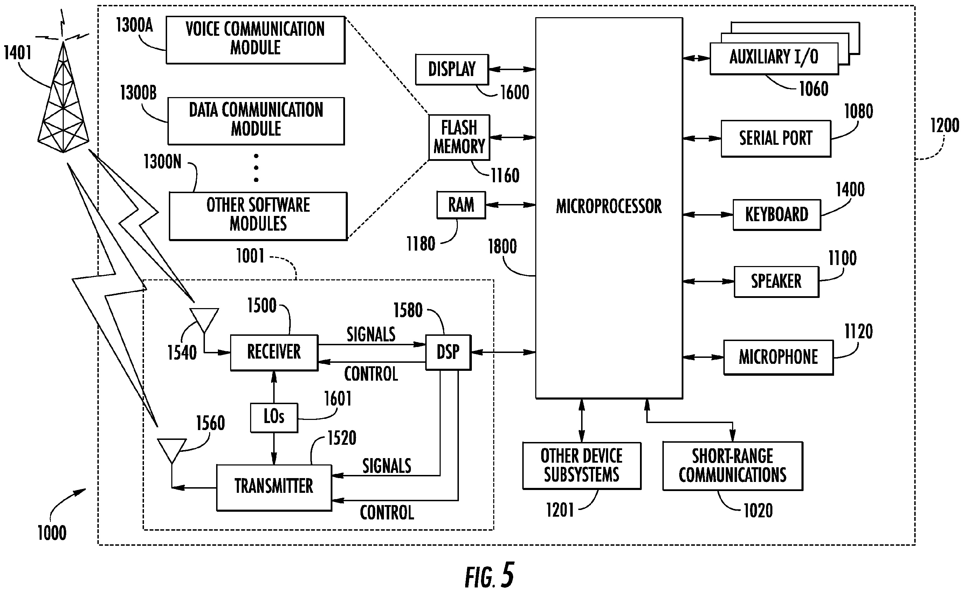

Exemplary components that may be used in various embodiments of the above-described mobile wireless communications device are now described with reference to an exemplary mobile wireless communications device 1000 shown in FIG. 5. The device 1000 illustratively includes a housing 1200, a keypad 1400 and an output device 1600. The output device shown is a display 1600, which may comprise a full graphic LCD. In some embodiments, display 1600 may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing 1200 may be elongated vertically, or may take on other sizes and shapes (including clamshell housing structures, for example). The keypad 1400 may include a mode selection key, or other hardware or software for switching between text entry and telephony entry.

In addition to the processing device 1800, other parts of the mobile device 1000 are shown schematically in FIG. 5. These include a communications subsystem 1001; a short-range communications subsystem 1020; the keypad 1400 and the display 1600, along with other input/output devices 1060, 1080, 1100 and 1120; as well as memory devices **1160,** 1180 and various other device subsystems 1201. The mobile device 1000 may comprise a two-way RF communications device having voice and data communications capabilities. In addition, the mobile device 1000 may have the capability to communicate with other computer systems via the Internet.

Operating system software executed by the processing device 1800 may be stored in a persistent store, such as the flash memory 1160, but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device 1800, in addition to its operating system functions, enables execution of software applications or modules 1300A-1300N on the device 1000, such as software modules for performing various steps or operations. A predetermined set of applications that control basic device operations, such as data and voice communications 1300A and 1300B, may be installed on the device 1000 during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network 1401. The PIM data items may be seamlessly integrated, synchronized and updated via the wireless network 1401 with the device user's corresponding data items stored or associated with a host computer system.

Communication functions, including data and voice communications, are performed through the communications subsystem 1001, and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem 1001 designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP 1580 provides for control of the receiver **1500** and the transmitter **1520.** For example, gains applied to communications signals in the receiver 1500 and transmitter **1520** may be adaptively controlled through automatic gain control algorithms implemented in the DSP 1580.

In a data communications mode, a received signal, such as a text message or web page download, is processed by the communications subsystem 1001 and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network 1401 via the communications subsystem 1001.

In a voice communications mode, overall operation of the device is substantially similar to the data communications mode, except that received signals are output to a speaker 1100, and signals for transmission are generated by a microphone 1120. Alternative voice or audio I/O subsystems, such as a voice message recording subsystem, may also be implemented on the device 1000. In addition, the display 1600 may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem 1020 may include an infrared device and associated circuits and components, near-field communication (NFC), or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that those modifications and embodiments are intended to be included within the scope defined by the appended claims.

## Claims

1. A mobile wireless communications system (30) comprising:
a mobile wireless communications device (32) comprising
a portable housing (33),
a wireless transceiver (34) carried by said portable housing,
a processor (35) carried by said portable housing and coupled to said wireless transceiver, and
a near-field communication, NFC, device (40) coupled to said processor and including a first NFC antenna (43);
an NFC carrying case (31') configured to carry and communicate directly with said mobile wireless communications device and comprising
a base panel (61') including a second NFC antenna (54') and configured to carry said mobile wireless communications device,
a removable cover panel (64') coupled to said base panel and configured to removably cover at least one side of said mobile wireless communications device,
a plurality of pairs of discontinuous NFC circuit segments (51'a-51'n) carried by said removable cover panel and coupled to said second NFC antenna (54'), and
a plurality of removable switch assemblies (55'a-55'n) each carried by said removable cover panel, each removable switch assembly (55'a-55'n) including an NFC controller (56'a-56'n) associated to a different NFC code and configured to selectively couple a respective pair of discontinuous NFC circuit segments (51'a-51'n) to said second NFC antenna (54') to establish direct NFC communication with said NFC device (40).

2. The mobile wireless communications system (30) of Claim 1, wherein each pair of discontinuous NFC circuit segments comprises a pair of discontinuous conductive traces (51'a-51'n).

3. The mobile wireless communications system of Claim 1, wherein each pair of discontinuous NFC circuit segments (51'a-51'n) comprises a pair of flexible discontinuous NFC circuit segments.

4. The mobile wireless communications system of Claim 1, wherein said plurality of switch assemblies is carried by an inner surface of said removable cover panel.

5. An NFC carrying case (31') for direct communication with an adjacent mobile wireless communications device (32) comprising a portable housing (33), a wireless transceiver (34) carried by the portable housing, a processor (35) carried by the portable housing and coupled to the wireless transceiver, and a near-field communication, NFC, device (40) coupled to the processor and including a first NFC antenna (43), the NFC carrying case comprising:
a base panel (61') including a second NFC antenna (54') and configured to carry the mobile wireless communications device;
a removable cover panel (64') coupled to said base panel and configured to removably cover at least one side of the mobile wireless communications device;
a plurality of pairs of discontinuous NFC circuit segments (51'a-51'n) carried by said removable cover panel and coupled to said second NFC antenna (54'); and
a plurality of removable switch assemblies (55'a-55'n) each carried by said removable cover panel, each removable switch assembly (55'a-55'n) including an NFC controller (56'a-56'n) associated to a different NFC code and configured to selectively couple a respective pair of discontinuous NFC circuit segments (51'a-51'n) to said second NFC antenna (54') to establish direct NFC communication with the NFC device (40).

6. The NFC carrying case of Claim 5, wherein each pair of discontinuous NFC circuit segments comprises a pair of discontinuous conductive traces (51'a-51'n).

7. A method of making an NFC carrying case (31') for direct communication with a mobile wireless communications device (32) comprising a portable housing (33), a wireless transceiver (34) carried by the portable housing, a processor (35) carried by the portable housing and coupled to the wireless transceiver, and a near-field communication, NFC, device (40) coupled to the processor and including a first NFC antenna (43), the method comprising:
forming a base panel (61') including a second NFC antenna (54') and to carry the mobile wireless communications device, and a removable cover panel (64') coupled to the base panel to removably cover at least one side of the mobile wireless communications device;
positioning a plurality of pairs of discontinuous NFC circuit segments (51'a-51'n) in the removable cover panel and coupled to said second NFC antenna (54'); and
positioning a plurality of switch assemblies (55'a-55'n) on the removable cover panel, each removable switch assembly for selectively coupling a respective pair of discontinuous NFC circuit segments (51'a-51'n) to said second NFC antenna (54') to establish direct NFC communication with the NFC device (40).

8. The method of Claim 7, wherein each pair of discontinuous NFC circuit segments comprises a pair of discontinuous conductive traces (51'a-51'n).

9. The method of Claim 7, wherein each pair of discontinuous NFC circuit segments (51'a-51'n) comprises a pair of flexible discontinuous NFC circuit segments.

10. The method of Claim 7, wherein each NFC controller (56'a-56'n) has a different function associated therewith.

## Patentansprüche

1. Mobiles drahtloses Kommunikationssystem (30) umfassend:
eine mobile drahtlose Kommunikationsvorrichtung (32) umfassend
ein tragbares Gehäuse (33);
einen drahtlosen Empfänger (34), der vom tragbaren Gehäuse getragen wird,
einen Prozessor (35), der vom tragbaren Gehäuse getragen wird und mit dem drahtlosen Empfänger gekoppelt ist, und
eine NFC-Vorrichtung (40) für Nahfeldkommunikation, die mit dem Prozessor gekoppelt ist und eine erste NFC-Antenne (43) aufweist;
einen NFC-Koffer (31'), der so konfiguriert ist, dass er die mobile drahtlose Kommunikationsvorrichtung trägt und direkt mit ihr kommuniziert, und
eine Grundplatte (61'), die eine zweite NFC-Antenne (54') umfasst und so konfiguriert ist, dass sie die mobile drahtlose Kommunikationsvorrichtung trägt,
eine abnehmbare Deckplatte (64'), die mit der Grundplatte gekoppelt und so konfiguriert ist, dass sie zumindest eine Seite der mobilen drahtlosen Kommunikationsvorrichtung abdeckt,
eine Mehrzahl Paare diskontinuierlicher NFC-Schaltungssegmente (51'a-51'n), die von der abnehmbaren Deckplatte getragen werden und mit der zweiten NFC-Antenne (54') gekoppelt sind, und
eine Mehrzahl abnehmbarer Schalterbaugruppen (55'a-55'n), die jeweils von der abnehmbaren Deckplatte getragen werden, wobei jede abnehmbare Schalterbaugruppe (55'a-55'n) eine NFC-Steuerung (56'a-56'n) aufweist, die einem anderen NFC-Code zugeordnet und so konfiguriert ist, dass sie selektiv ein jeweiliges Paar diskontinuierlicher NFC-Schaltungssegmente (51'a-51'n) mit der zweiten NFC- Antenne (54') koppelt, um eine direkte NFC-Kommunikation mit der NFC-Vorrichtung (40) herzustellen.

2. Mobiles drahtloses Kommunikationssystem (30) nach Anspruch 1, wobei jedes Paar diskontinuierlicher NFC-Schaltungssegmente ein Paar diskontinuierlicher Leiterbahnen (51'a-51'n) umfasst.

3. Mobiles drahtloses Kommunikationssystem nach Anspruch 1, wobei jedes Paar diskontinuierlicher NFC-Schaltungssegmente (51'a-51'n) ein Paar flexibler diskontinuierlicher NFC-Schaltungssegmente umfasst.

4. Mobiles drahtloses Kommunikationssystem nach Anspruch 1, wobei die Mehrzahl Schalterbaugruppen von einer Innenfläche der abnehmbaren Abdeckplatte getragen wird.

5. NFC-Koffer (31') für direkte Kommunikation mit einer angrenzenden mobilen drahtlosen Kommunikationsvorrichtung (32), umfassend ein tragbares Gehäuse (33), einen drahtlosen Empfänger (34), der vom tragbaren Gehäuse getragen wird, einen Prozessor (35), der vom tragbaren Gehäuse getragen wird und mit dem drahtlosen Empfänger gekoppelt ist, und eine NFC-Vorrichtung (40) für Nahfeldkommunikation, die mit dem Prozessor gekoppelt ist und eine erste NFC- Antenne (43) aufweist, der NFC-Koffer umfassend:
eine Grundplatte (61'), die eine zweite NFC-Antenne (54') aufweist und so konfiguriert ist, dass sie die mobile drahtlose Kommunikationsvorrichtung trägt;
eine abnehmbare Deckplatte (64'), die mit der Grundplatte gekoppelt und so konfiguriert ist, dass sie zumindest eine Seite der mobilen drahtlosen Kommunikationsvorrichtung abdeckt;
eine Mehrzahl Paare diskontinuierlicher NFC-Schaltungssegmente (51'a-51'n), die von der abnehmbaren Deckplatte getragen werden und mit der zweiten NFC-Antenne (54') gekoppelt sind; und
eine Mehrzahl abnehmbarer Schalterbaugruppen (55'a-55'n), die jeweils von der abnehmbaren Deckplatte getragen werden, wobei jede abnehmbare Schalterbaugruppe (55'a-55'n) eine NFC-Steuerung (56'a-56'n) aufweist, die einem anderen NFC-Code zugeordnet und so konfiguriert ist, dass sie selektiv ein jeweiliges Paar diskontinuierlicher NFC-Schaltungssegmente (51'a-51'n) mit der zweiten NFC- Antenne (54') koppelt, um eine direkte NFC- Kommunikation mit der NFC- Vorrichtung (40) herzustellen.

6. NFC-Koffer nach Anspruch 5, wobei jedes Paar diskontinuierlicher NFC-Schaltungssegmente ein Paar diskontinuierlicher Leiterbahnen (51'a-51'n) umfasst.

7. Verfahren zur Herstellung eines NFC-Koffers (31') für direkte Kommunikation mit einer mobilen drahtlosen Kommunikationsvorrichtung (32), umfassend ein tragbares Gehäuse (33), einen drahtlosen Empfänger (34), der vom tragbaren Gehäuse getragen wird, einen Prozessor (35), der vom tragbaren Gehäuse getragen wird und mit dem drahtlosen Empfänger gekoppelt ist, und eine NFC-Vorrichtung (40) für Nahfeldkommunikation, die mit dem Prozessor gekoppelt ist und eine erste NFC-Antenne (43) aufweist, wobei das Verfahren Folgendes umfasst:
Ausbilden einer Grundplatte (61'), die eine zweite NFC-Antenne (54') aufweist und die mobile drahtlose Kommunikationsvorrichtung trägt, und eine abnehmbare Deckplatte (64'), die mit der Grundplatte gekoppelt und so konfiguriert ist, dass sie zumindest eine Seite der mobilen drahtlosen Kommunikationsvorrichtung abdeckt;
Positionieren einer Mehrzahl Paare diskontinuierlicher NFC-Schaltungssegmente (51'a-51'n) in der abnehmbaren Deckplatte, und die mit der zweiten NFC-Antenne (54') gekoppelt sind; und
Positionieren einer Mehrzahl Schalterbaugruppen (55'a-55'n) auf der abnehmbaren Deckplatte, damit jede abnehmbare Schalterbaugruppe selektiv ein jeweiliges Paar diskontinuierlicher NFC-Schaltungssegmente (51'a-51'n) mit der zweiten NFC-Antenne (54') gekoppelt wird, um eine direkte NFC-Kommunikation mit der NFC-Vorrichtung (40) herzustellen.

8. Verfahren nach Anspruch 7, wobei jedes Paar diskontinuierlicher NFC- Schaltungssegmente ein Paar diskontinuierlicher Leiterbahnen (51'a-51'n) umfasst.

9. Verfahren nach Anspruch 7, wobei jedes Paar diskontinuierlicher NFC-Schaltungssegmente (51'a-51'n) ein Paar flexibler diskontinuierlicher NFC-Schaltungssegmente umfasst.

10. Verfahren nach Anspruch 7, wobei jede NFC-Steuerung (56'a-56'n) eine andere damit verbundene Funktion hat.

## Revendications

1. Système de communication mobile sans fil (30) comprenant :
un dispositif de communication mobile sans fil (32) comprenant
un boîtier portable (33),
un émetteur-récepteur sans fil (34) porté par ledit boîtier portable,
un processeur (35) porté par ledit boîtier portable et couplé audit émetteur-récepteur sans fil, et
un dispositif de communication en champ proche, NFC, (40) couplé audit processeur et comportant une première antenne NFC (43) ;
une mallette de transport NFC (31') configurée pour porter et communiquer directement avec ledit dispositif de communication mobile sans fil et comprenant
un panneau de base (61') comportant une deuxième antenne NFC (54') et configuré pour porter ledit dispositif de communication mobile sans fil,
un panneau de couverture amovible (64') couplé audit panneau de base et configuré pour couvrir de manière amovible au moins un côté dudit dispositif de communication mobile sans fil,
une pluralité de paires de segments de circuit NFC discontinus (51'a-51'n) portées par ledit panneau de couverture amovible et couplées à ladite deuxième antenne NFC (54'), et
une pluralité d'ensembles de commutateurs amovibles (55'a-55'n), chacun étant porté par ledit panneau de couverture amovible, chaque ensemble de commutateur amovible (55'a-55'n) comportant un contrôleur NFC (56'a-56'n) associé à un code NFC différent et configuré pour coupler sélectivement une paire respective de segments de circuit NFC discontinus (51'a-51'n) à ladite deuxième antenne NFC (54') pour établir une communication NFC directe avec ledit dispositif NFC (40).

2. Système de communication mobile sans fil (30) de la revendication 1, dans lequel chaque paire de segments de circuit NFC discontinus comprend une paire de traces conductrices discontinues (51'a-51'n).

3. Système de communication mobile sans fil de la revendication 1, dans lequel chaque paire de segments de circuit NFC discontinus (51'a-51'n) comprend une paire de segments de circuit NFC discontinus flexibles.

4. Système de communication mobile sans fil de la revendication 1, dans lequel ladite pluralité d'ensembles de commutateurs est portée par une surface intérieure dudit panneau de couverture amovible.

5. Mallette de transport NFC (31') pour une communication directe avec un dispositif de communication mobile sans fil (32) adjacent comprenant un boîtier portable (33), un émetteur-récepteur sans fil (34) porté par le boîtier portable, un processeur (35) porté par le boîtier portable et couplé à l'émetteur-récepteur sans fil, et un dispositif de communication en champ proche, NFC, (40) couplé au processeur et comportant une première antenne NFC (43), la mallette de transport NFC comprenant :
un panneau de base (61') comportant une deuxième antenne NFC (54') et configuré pour porter le dispositif de communication mobile sans fil ;
un panneau de couverture amovible (64') couplé audit panneau de base et configuré pour couvrir de manière amovible au moins un côté du dispositif de communication mobile sans fil ;
une pluralité de paires de segments de circuit NFC discontinus (51'a-51'n) portées par ledit panneau de couverture amovible et couplées à ladite deuxième antenne NFC (54') ; et
une pluralité d'ensembles de commutateurs amovibles (55'a-55'n), chacun étant porté par ledit panneau de couverture amovible, chaque ensemble de commutation amovible (55'a-55'n) comportant un contrôleur NFC (56'a-56'n) associé à un code NFC différent et configuré pour coupler sélectivement une paire respective de segments de circuit NFC discontinus (51'a-51'n) à ladite deuxième antenne NFC (54') pour établir une communication NFC directe avec le dispositif NFC (40).

6. Mallette de transport NFC de la revendication 5, dans laquelle chaque paire de segments de circuit NFC discontinus comprend une paire de traces conductrices discontinues (51'a-51'n).

7. Procédé de fabrication d'une mallette de transport NFC (31') pour une communication directe avec un dispositif de communication mobile sans fil (32) comprenant un boîtier portable (33), un émetteur-récepteur sans fil (34) porté par le boîtier portable, un processeur (35) porté par le boîtier portable et couplé à l'émetteur-récepteur sans fil, et un dispositif de communication en champ proche, NFC, (40) couplé au processeur et comportant une première antenne NFC (43), le procédé comprenant :
la formation d'un panneau de base (61') comportant une deuxième antenne NFC (54') et permettant de porter le dispositif de communication mobile sans fil, et d'un panneau de couverture amovible (64') couplé au panneau de base pour couvrir de manière amovible au moins un côté du dispositif de communication mobile sans fil ;
le positionnement d'une pluralité de paires de segments de circuit NFC discontinus (51' a-51'n) dans le panneau de couverture amovible, qui sont couplées à ladite deuxième antenne NFC (54') ; et
le positionnement d'une pluralité d'ensembles de commutateurs (55'a-55'n) sur le panneau de couverture amovible, chaque ensemble de commutation amovible permettant de coupler sélectivement une paire respective de segments de circuit NFC discontinus (51'a-51'n) à ladite deuxième antenne NFC (54') pour établir une communication NFC directe avec le dispositif NFC (40).

8. Procédé de la revendication 7, dans lequel chaque paire de segments de circuit NFC discontinus comprend une paire de traces conductrices discontinues (51'a-51'n).

9. Procédé de la revendication 7, dans lequel chaque paire de segments de circuit NFC discontinus (51'a-51'n) comprend une paire de segments de circuit NFC discontinus flexibles.

10. Procédé de la revendication 7, dans lequel chaque contrôleur NFC (56'a-56'n) a une fonction différente qui lui est associée.
